# EUROPEAN PATENT SPECIFICATION

(11) **EP 1 053 909 B1**
(45) Date of publication and mention of the grant of the patent: **22.03.2006**
(21) Application number: 00304302.3
(22) Date of filing: 22.05.2000
(51) Int. Cl.: B60P 7/13, B60P 1/64

(54) **Vehicle having a load handling system**
Kraftfahrzeug mit einem Lasthandhabungssystem
Véhicule équipé d'un système de manipulation de charges

(30) Priority: 21.05.1999 GB 9911959
(43) Date of publication of application: 22.11.2000
(73) Proprietor: Hiab Limited, Shrewsbury SY1 3AG (GB)
(72) Inventor: Harrison, Gary Desmond, Shrewsbury, Shropshire SY2 5LH (GB); Locker, Stephen William, Stramshall, Staffordshire ST14 5DL (GB)
(74) Representative: Price, Paul Anthony King

(56) References cited:
- EP-A- 0 634 304
- EP-A- 0 925 999
- WO-A-98/58818
- GB-A- 2 220 921

## Description

The invention relates to a vehicle having a load handling system for loading an ISO payload module.

The invention has particular application to ISO payload modules which are of the standard 20-foot (6-metre) length specified by ISO standard 668 and have downwardly-facing corner fittings compliant with ISO 668 to enable the modules to be locked down onto rail wagons, conventional highway semi-trailers etc. The height of the module may vary within the standard and examples of the different types of payload module are freight or shipping containers, frames containing tanks, command/communication units and general-purpose bodies.

There are many known designs of vehicles with load handling systems of a variety of different types. In recent years, there has been interest in designing a vehicle with a load handling system capable of handling ISO freight containers of which many milliorz are in day-to-day use around the world. In particular, the military is interested in vehicles able to transport 20-foot (6-metre) ISO containers.

ISO standard 668 requires that all handling and locking of the container should be via its corner fittings. It is necessary to slidably support the underside of the container as the container is lifted up and over the rear end of the vehicle during the loading operation. This departure from the ISO standard is acceptable as long as the underside of the container is not damaged during the loading. It is known to provide support members at the rear of the vehicle for slidably supporting the side rails at the outer lower side regions of the ISO container during loading. The support members provide slidable support to a sufficiently long length of the side rails of the ISO container so that damage to the container does not occur. The support members are mounted on pivots so that they can accommodate the changing attitude of the container during the loading operation as the container gradually becomes horizontal. Such known container support members are disclosed in WO98/58818.

When the loading operation has been completed, the rear lowermost corner fittings of the container need to be locked down to secure the container for transit. Also, the side rails of the container should be separated from the sliding support surfaces of the support members to prevent the side rails from being damaged when the container bounces up and down during transit, particularly when the vehicle is moving across rough country. WO98/58818 has a frame which is pivoted upwards from a stowed position by cylinders so that twistlocks are inserted into the rear corner fittings of the container to lock the container in position for transit. The support members are then lowered by a further set of cylinders so as to be clear of the side rails of the container to prevent damage thereto during transit. Alternatively, the support members can be left in position, and the cylinders that pivot the frame are activated to a slightly greater extent to cause the twistlocks on the frame to slightly raise the container to lift the side rails of the container clear of the support members. WO98/58818 discloses the features of pre-characterising portions of claims 1 and 17.

In UK Patent Application No. 9726623.3 and the corresponding European Patent Application No. 98310225.2 (EP-A-0,925,999) in the name of Partek Cargotec Limited, the twistlocks are provided as part of the support members, rather than being separate as in WO98/58818. Specifically, the twistlocks are recessed into the support members between front and rear sections of the longitudinal sliding beds of the support members. The load handling system loads the ISO container onto the vehicle until the rear parts of the side rails of the container are resting on the support members and straddle across the twistlocks. Cylinders at the rear of the vehicle are then actuated to push the support members backwards underneath the stationary container, so that the rear corner fittings of the container drop down into the recessed seats to be locked down for transit. At the same time, the front sections of the support members pivot slightly downwards so as to move out of contact with the side rails of the container to prevent damage thereto during transit. EP-A-0,925,999 comprises prior art under EPC Article 54(3).

With the prior art arrangements discussed above, heavy-duty cylinders have to be provided at the rear of the vehicle to move the rear twistlocks towards the rear corner fittings of the container, and this increases cost and complexity.

EP-A-0,634,304 discloses a vehicle having a load handling system for loading an ISO container up and over the rear end of the vehicle. Said rear end includes a pivotable skid plate which has a width which is slightly less than the width of the ISO container and over which the ISO container slides during the loading operation. Locking clamps are provided for locking down the rear corner fittings of the container.

According to a first aspect of the present invention, there is provided a vehicle comprising:
a load handling system having a loading movement for loading a 20-foot (6-metre) ISO payload module onto the vehicle over the rear of the vehicle;
first and second pivots at respective sides of the rear of the vehicle;
first and second support members pivotably mounted on the first and second pivots respectively, for slidably supporting outer lower side regions of the ISO module during loading; and
first and second releasable locks for each locking down a lower corner fitting at the rear of a respective one of the outer lower side regions of the ISO module;
characterised in that:
   each support member has a recessed seat positioned vertically above or in front of the respective pivot and including a respective one of the releasable locks; and
   the load handling system is arranged so that the final part of its loading movement pulls the lower corner fittings of the ISO module forwards onto the recessed seats of the support members.

Thus, there is no need to provide power-operated adjustment means for moving the support members during the loading operation when they are carrying the weight of the payload module. Instead, use is made of the final part of the loading movement produced by the load handling system to pull the lower corner fittings forwards onto the seats, to enable the locks to be operated to lock down the module ready for transit. Consequently, the construction at the rear of the vehicle is simplified and made cheaper.

The weight of the payload module is transferred from the support members to the main part of the vehicle and ultimately through the vehicle wheels to the ground. The support members may be adjustable, e.g. manually, when the module is not being carried, so as to permit, for example, the support members to be lowered to a stowed position when they are not needed. This could be achieved by providing the structure which carries the support members with removable pin(s) which may be removed when the support members are not in use, so as to lower the height of the pivots and thus also lower the height of the support members. When the support members next need to be used, they would be raised back up to their operational positions and the removable pin(s) would be reinserted.

However, it is preferable that the structure which carries the support members has a fixed configuration so as to maintain a static position of the pivots relative to the vehicle chassis at all times. This provides a simplified construction.

Preferably, the seats of the support members are positioned vertically above the pivots. Because the seats are not in front of or behind the pivots, the weight transmission paths from the lower corner fittings of the module on the seats is straight downwards through the pivots to the underlying load-carrying structure of the vehicle. Also, the support members are stably balanced when the module is fully loaded onto the vehicle.

By contrast, if the seats are in front of the pivots, the weight transmission paths are not optimal and some end stops or the like must be provided to prevent unwanted further pivoting of the support members when the module is fully loaded onto the vehicle.

Preferably, each support member has a longitudinal bed with front and rear sections for slidably supporting the respective outer lower side region of the ISO module during loading, and the seat is positioned in the longitudinal bed between the front and rear sections thereof; and the load handling system is arranged so that the final part of its loading movement pulls the lower corner fittings of the ISO module forwards off the rear sections of the longitudinal beds of the support members and onto the seats of the support members.

In some preferred embodiments, the arrangement is such that, when the lower corner fittings are sitting on the seats and are locked down by the releasable locks, there is at each side of the vehicle a gap between the outer lower side region of the ISO module and at least the front end of the front section of the longitudinal bed. In an arrangement in which the seats are vertically above the pivots, this could be achieved, for example, by unlocking the front sections from the seats and pivoting them down out of the way.

For some preferred embodiments, the seat of each support member is slopingly recessed into the longitudinal bed between the front and rear sections thereof, and the arrangement is such that, when the seat is generally horizontal with the respective lower corner fitting sitting thereon and locked down thereonto by the releasable lock, the front section of the longitudinal bed slopes downwards so as to provide a gap between the outer lower side region of the ISO module and at least the front end of the front section of the longitudinal bed.

Preferably, each support member comprises front and rear arms which are pivotably connected together, the front arm providing the front section of the longitudinal bed and the rear arm providing the rear section of the longitudinal bed.

Preferably, the front arm also provides the seat and carries the releasable lock, and the rear arm is pivotable downwards to a stowed position.

Thus, when the container is fully loaded onto the vehicle, and the rear section of the longitudinal beds provided by the rear arms are no longer needed to support the module, the rear arms may be pivoted out of the way.

Such stowage of the rear arms may also be necessary if the rear of the vehicle is provided with a pair of inboard rollers and the load handling system is used to load a flatrack onto the vehicle. A flatrack is typically a flat platform with an A-shaped frame at the front end with a bar which may be engaged by the load handling system. The underside of the flatrack has a pair of strong central longitudinal rails which can run up and over the pair of inboard rollers at the rear of the vehicle during loading of the flatrack. By pivoting the rear arms down to their stowed positions, the arms will not clash with the front end of the flatrack during its loading.

In many embodiments, the vehicle further comprises a rigid transverse member at the ends of which are the first and second pivots carrying the support members. It is convenient to place the two inboard rollers on the rigid transverse member, rather than elsewhere on the vehicle, such as directly on the chassis rails of the vehicle.

Preferably, the first and second pivots are no more than 25cm behind the rear end(s) of the main longitudinal chassis girder(s). This helps to ensure that, when the module is fully loaded onto the vehicle, there will not be an excessive amount of module weight behind the rearmost vehicle axle, which could make the vehicle unstable during transit. Thus, it may be desirable to have the pivots substantially at or even slightly in front of the rear end(s) of the chassis girder(s).

According to a second aspect of the present invention there is provided a method in which a load handling system of a vehicle is used to load a 20-foot (6-metre) ISO payload module onto the vehicle over the rear end of the vehicle, wherein outer lower side regions of the ISO module are slidably supported on pivotable support members at the rear of the vehicle, characterised in that the final part of the loading movement of the load handling system pulls lower corner fittings at the rear ends of the outer lower side regions of the ISO module forwards onto recessed seats positioned in the support members vertically above or in front of the pivots of the support members.

It is preferred that the load handling system is of the hook-lift type, but it is envisaged that the present invention will also be applicable to other types of load handling system.

When the load handling system is of the hook-lift type, it is preferred that the loading movement of the load handling system causes a loading hook thereof to have a first arcuate phase of movement followed by a second linear phase of movement the end of which is arranged to pull the lower corner fittings of the ISO module forwards onto the seats.

The features from the different aspects of the present invention may be combined in various permutations, whilst still working the present invention.

Non-limiting embodiments of the present invention will now be described with reference to the accompanying drawings, in which:-
Fig. 1 is a side view of a vehicle in accordance with the present invention;
Fig. 2 is a plan view of rear apparatus of the vehicle;
Fig. 3 is a rear view of the rear apparatus;
Figs. 4-10 are a series of diagrammatic side views illustrating sequential stages in a loading operation in accordance with the method of the present invention;
Fig. 11 is a side view showing the stowed configuration of the rear apparatus, when the load handling system is being used to load a flatrack;
Fig. 12 is a side view showing the deployed configuration of the rear apparatus at an intermediate stage of loading a container; and
Fig. 13 is a side view of the rear apparatus showing a rear arm thereof in a stowed position at the completion of the loading of the container.

Referring to the Figures, a vehicle 1 in the form of a truck has a cab 2 at the front end of a chassis 3 which includes two main longitudinal chassis girders which are positioned along the centre of the vehicle between the sets of wheels 4.

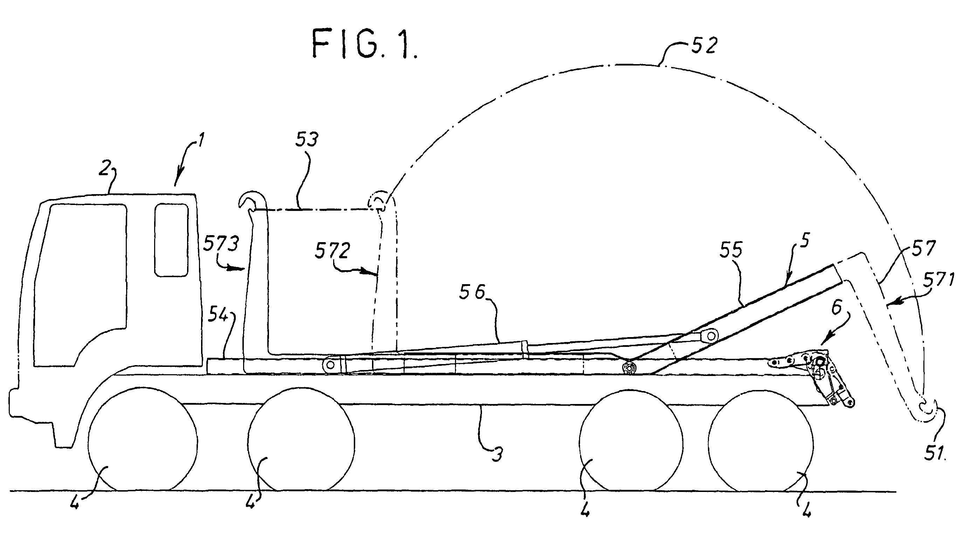

The vehicle 1 has a load handling system 5 which is shown in various positions in Fig. 1 forming different stages of the loading operation performed by the load handling system. The load handling system 5 is of the hook-lift type and is the version in which the hook 51 of the load handling system firstly follows an arcuate path 52 and then follows a linear path 53, from the beginning to the end of the loading movement of the hook. In an alternative version of the hook-lift type of load handling system to which the present invention may also be applied, the first arcuate path is followed by a second arcuate path rather than by the linear path.

The load handling system 5 is a piece of equipment which may be fitted as a unit to the top of the chassis 3, and also removed as a unit therefrom when it is no longer needed on the vehicle. The load handling system 5 comprises a base frame 54 which is securely fixed to the top of the chassis 3. A main arm 55 is articulated onto the base frame 54 and moved by a cylinder and piston arrangement 56. A hook arm 57 has a first length which is slidably received inside the main arm 55 and may be pushed in and out relative to the main arm 55 by a second cylinder and piston arrangement (not shown) contained within the main arm 55. A second length of the hook arm 57 is at an angle relative to the first length and carries at its free end the hook 51.

During the first phase of the loading movement, the cylinder and piston arrangement 56 is operated to pivot the main arm 55 and move the hook arm 57 from the starting position 571 to the intermediate position 572. In moving between these two positions, the hook 51 traces out the arcuate path 52. Then, the second cylinder and piston arrangement (not shown) within the main arm 55 is operated in order to push the hook arm 57 from the intermediate position 572 to the final position 573 of its loading movement. In moving from the intermediate position 572 to the final position 573, the hook 51 moves along the linear path 53.

Apparatus 6 is positioned at the rear of the vehicle. Specifically, it is rigidly fastened to the rear end of the base frame 54.

The geometry of the load handling system 5 is such that the front end of a container being loaded by the load handling system will not clash with the apparatus 6 before the container is lowered down onto the apparatus 6 to be slidably supported thereon. The geometry of the load handling system 5 is also such that, when a flatrack is being loaded, the front end of the flatrack will not clash with the apparatus 6 prior to being lowered down onto inboard rollers and will also not clash during the later stages of the loading operation of the flatrack.

Important dimensions for the geometry of the load handling system 5 are shown in Fig. 1. Specifically, when the hook arm 57 is in the starting position 571 through to the intermediate position 572, the radius of the arcuate path 52 traced out by the base of the mouth of the hook 51 is 3.178m. In the intermediate position 572, the height of the base of the mouth above the main arm 55 is 1.516m. The height above the articulation point of the main arm 55 is 1.676m. The distance forward from the articulation point is 2.7m.

In moving from the intermediate position 572 to the final position 573, the base of the mouth of the hook 51 is pushed forwards a distance of 1.4m.

The pivot incorporated in the apparatus 6 is positioned a distance of 2.058m behind the articulation point of the main arm 55.

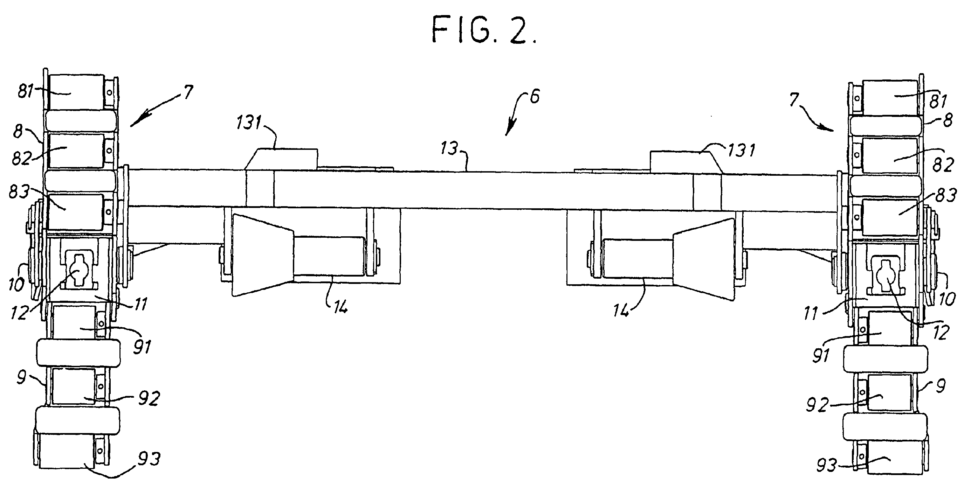

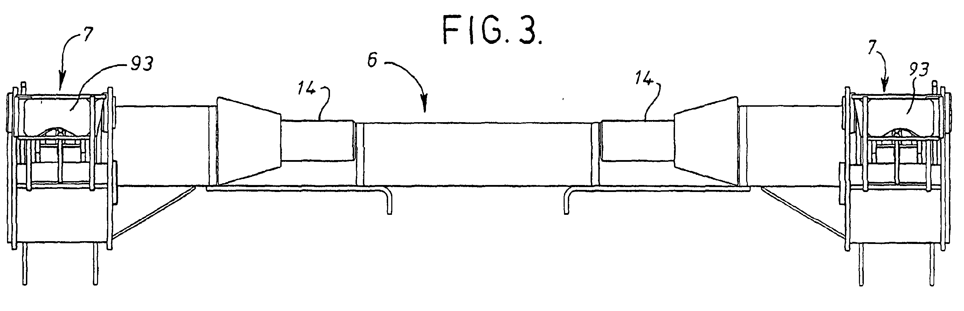

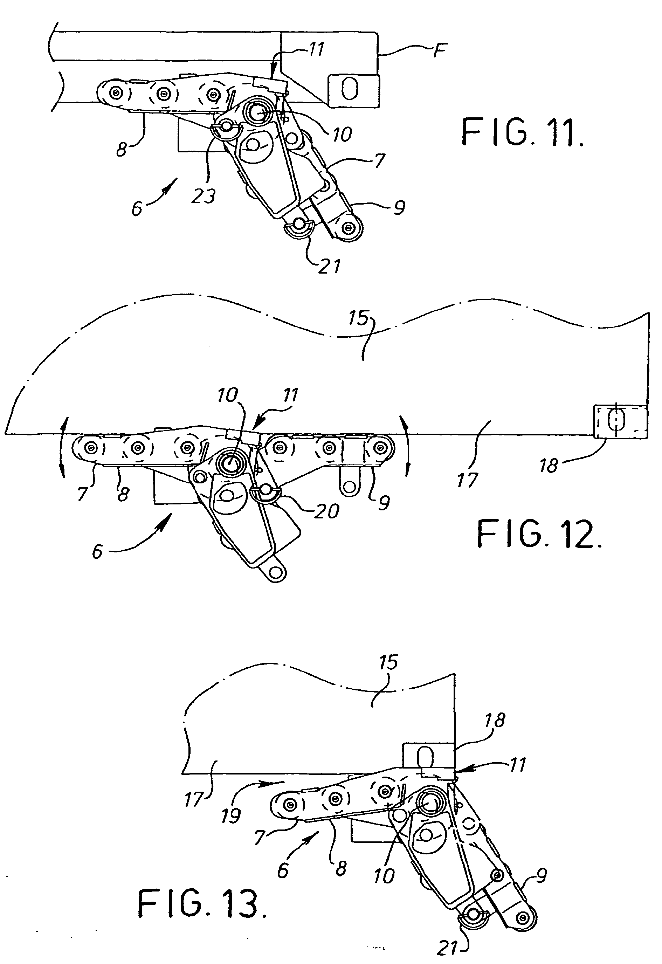

Referring to Figs. 2 and 3, the apparatus 6 is shown in more detail. Each side of the apparatus 6 has a container support member 7 comprising a front arm 8 which is pivotably connected to a rear arm 9 at a pivot point 10. The variety of different configurations of the arms 8, 9 may be seen in Figs. 11-13.

The front arm 8 has a series of rollers 81, 82, 83 which define a front roller bed. The rear arm 9 has a series of rollers 91, 92, 93 which define a rear roller bed. The front arm 8 also includes a seat 11 between the rollers 83 and 91, and the seat 11 includes a conventional twistlock 12 suitable for locking onto one of the rear corner castings of an ISO container.

The apparatus 6 also comprises a transverse beam 13 at the ends of which are the pivots 10 which pivotably carry the container support members 7.

The transverse beam 13 carries a pair of inboard rollers 14 which are used when loading a flatrack.

Portions 131 of the transverse beam 13 are rigidly secured, e.g by welding or bolts, to the rear end of the base frame 54 which is itself rigidly secured to the chassis 3. The pivots 10 are thus given permanent, defmed positions and are not adjustable.

The seats 11 are directly vertically above the pivots 10 so as to provide a good load transmission path for weight applied to the seats 11 to pass via the pivots 10 and the transverse beam 13 to the rest of the vehicle through the rigid interface portions 131.

The pair of seats 11 are provided at the rear of the vehicle. Although not shown in the Figures, a further pair of seats are provided just behind the final position 573 of the hook arm 57 for receiving thereon the front corner castings of an ISO container. Those forward seats also have twistlocks for locking down the corner castings. The transverse separation between the forward seats is the same as the transverse separation between the rearward seats 11. The longitudinal separation between the forward seats and the rearward seats 11 is fixed and unadjustable and is determined by the size of the container that is to be loaded onto the vehicle. The longitudinal separation between the forward seats and the rearward seats is fixed to be appropriate for a 20-foot (6-metre) ISO container.

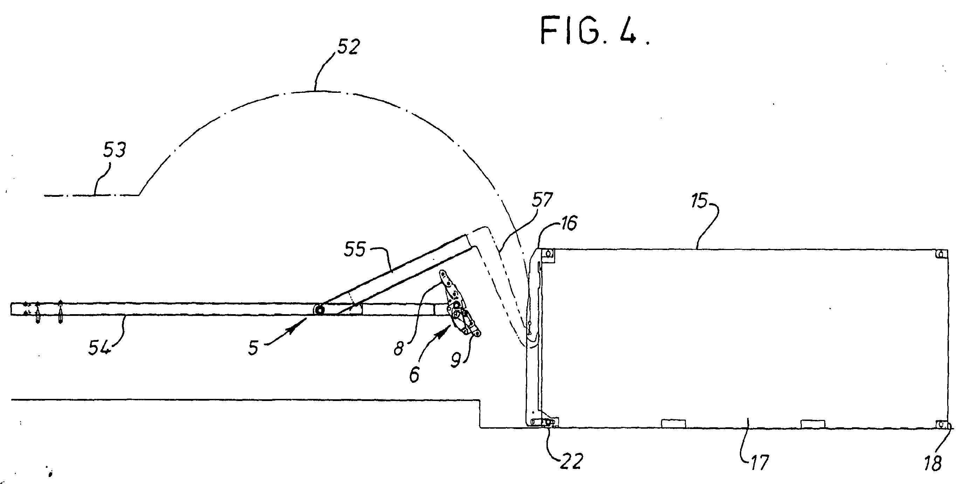

A loading operation in accordance with the method of the present invention is diagrammatically shown in Figs. 4-10 which show in sequence the stages of the method.

In Figs. 4-10, many components of the vehicle are omitted for the sake of clarity, including the cylinder and piston arrangement 56.

As shown in Fig. 4, a 20-foot (6-metre) ISO container 15 is sitting on the ground behind the vehicle at the beginning of the loading operation. A detachable front frame 16 is fitted to the front end of the container 15 and incorporates a bar which is hooked by the hook 51 of the load handling system.

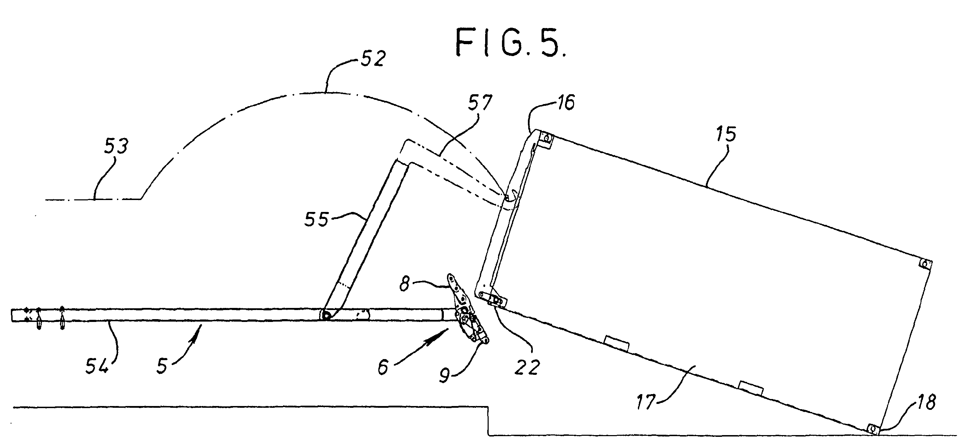

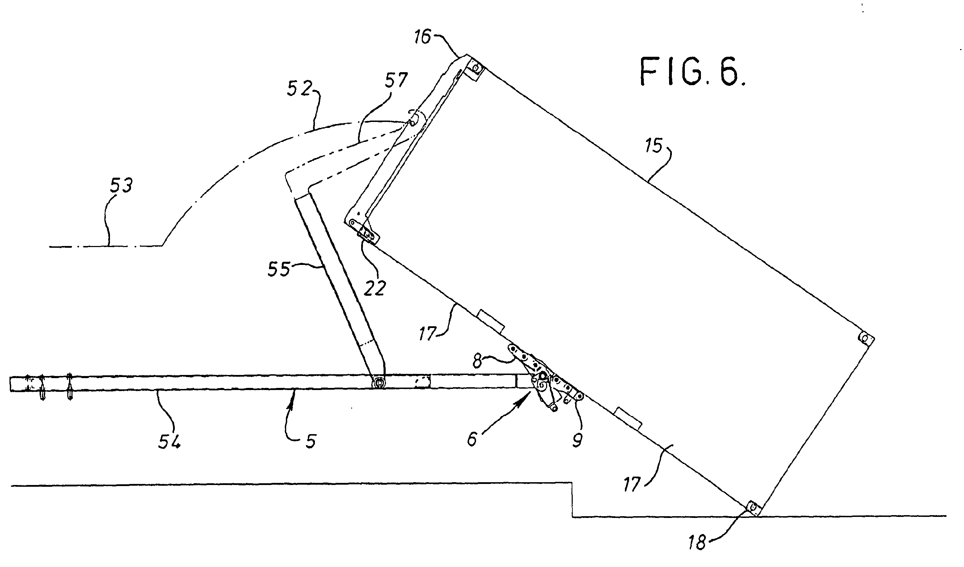

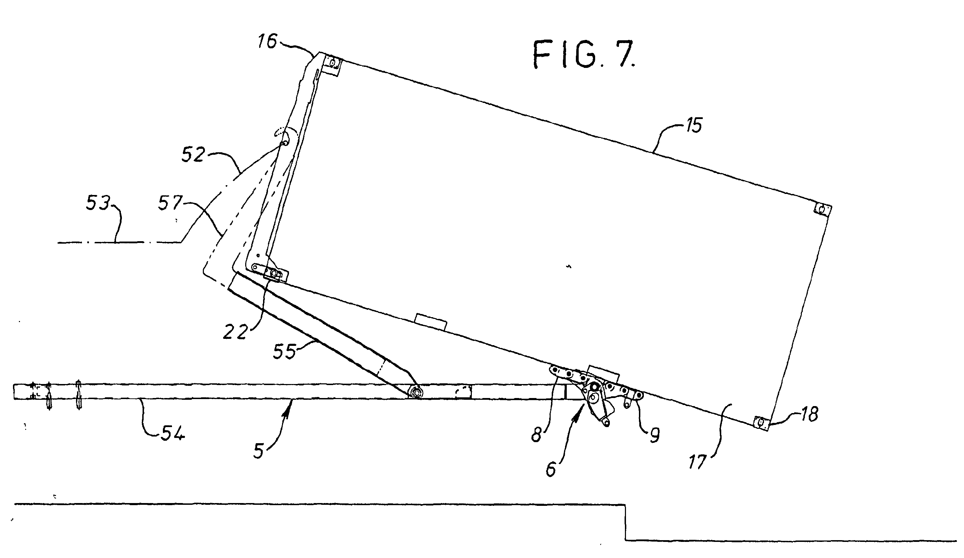

In Fig. 5, the front end of the container 15 and the detachable front frame 16 are clearing the apparatus 6. Further on in the loading operation, as shown in Fig. 6, side rails 17 of the container are seated down onto the rollers 81-83 and 91-93 of the apparatus 6 so that the container support members begin to carry the weight of the container 15. As the container is pulled further onto the vehicle (see Fig. 7), the side rails 17 slide over the roller beds provided by the rollers 81-83 and 91-93. The seats 11 with their twistlocks 12 are positioned beneath the level of the tops of the rollers 81-83 and 91-93 so as not to clash with the side rails 17.

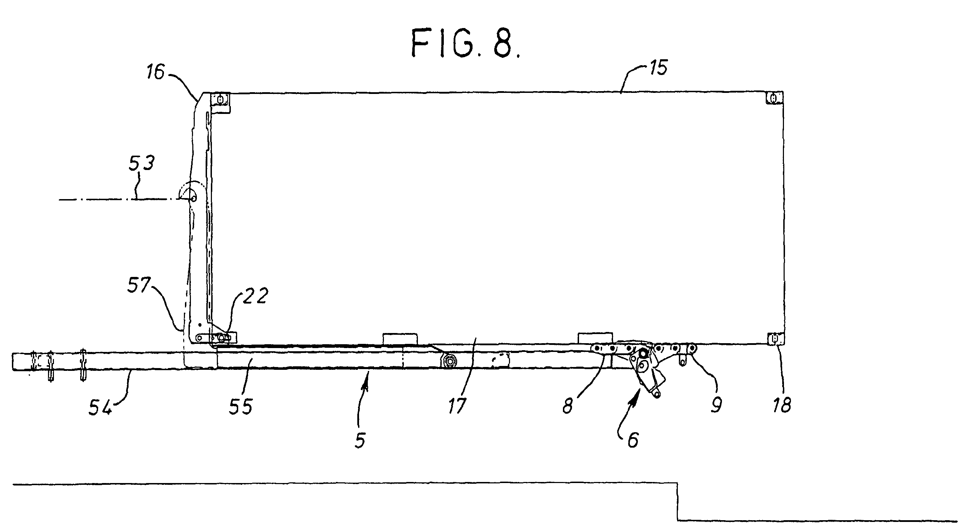

At the end of the first, arcuate phase of the loading movement shown in Fig. 8, the container 15 is horizontally mounted on the vehicle but has its rear portion projecting back over the end of the vehicle.

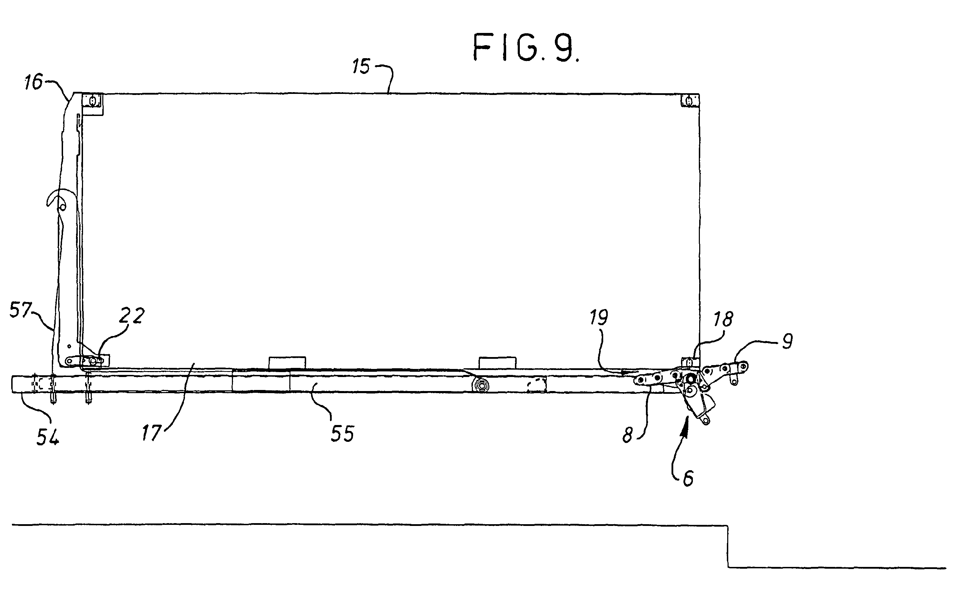

In the second, linear phase of the loading motion, moving from Fig. 8 to Fig. 9, the cylinder and piston arrangement (not shown) within the main arm 55 is extended in order to push forwards the hook arm 57 and thereby pull the container 15 forwards to its final, fully-loaded position shown in Fig. 9.

For each of the container support members 7, the seat 11 is slopingly recessed below the level of the sliding support surface provided by the tops of the rollers 81-83 and 91-93, so that there is a step up from the rear end of the seat 11 to the roller 91 and a generally smooth upwards slope of the seat blending its forward end into the roller 83.

Consequently, when the container 15 approaches the fully-loaded position shown in Fig. 9, during the final part of the loading movement, the rear corner casting 18 of the container is pulled forwards off the roller 91 and drops slightly down onto the seat 11. Because of the slope of the seat 11, the front arm 8 is pivoted slightly anticlockwise as viewed in Fig. 8 to move to the position shown in Fig. 9. This creates a gap 19 between the rollers 81-83 and the side rail 17 so that the entire weight of the relevant rear part of the container 15 is carried by the rear corner casting 18 sitting on the seat 11. The twistlock 12 is then activated to lock the corner casting 18 down onto the seat 11.

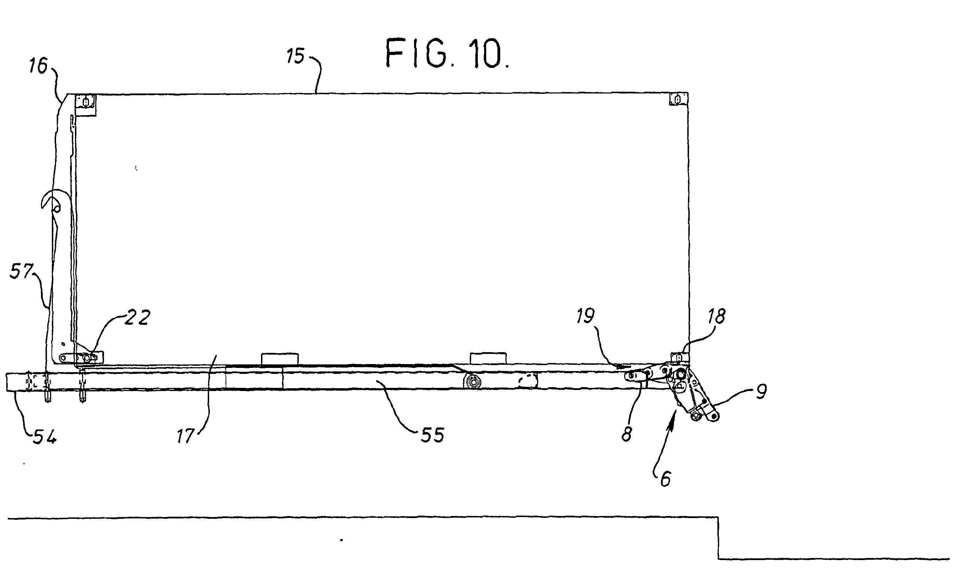

A locking pin 20 (see Fig. 12) is then removed to enable the rear arm 9 to be pivoted downwards to a stowed position (see Fig. 10) in which it is locked by a further locking pin 21 (see Fig. 13).

In order to unload the container 15, the locking pin 21 would be removed, the rear arm 9 swung upwards and the locking pin 20 reinstated. Then, the loading movement of the load handling system 5 would be reversed in order to push the container off the vehicle in an unloading or demounting operation.

When the container is fully loaded onto the vehicle as shown in Fig. 9 or Fig. 10. forward corner castings 22 of the container 15 are locked down onto the vehicle by the twistlocks (not shown) of the forward seats (not shown).

The container may now be transported because all four corner castings on its lower surface are sitting on seats and are locked down by twistlocks, and the side rails 17 are clear from the rollers 81-83 so as not to be damaged thereby during transit.

During loading of the container, the front arm 8 is rigidly locked to the rear arm 9 so that the two arms form a single unit which pivots about the pivot 10 (see Fig. 12) to accommodate the changing angle of the container 15 as it is loaded onto the vehicle.

At the completion of the loading operation, when the rear corner casting 18 is sitting on the seat 11, the side rail 17 is spaced from the rollers 81-83 by the gap 19 in order to prevent damage to the side rail during transit. As is clearly shown in Fig. 13, the seat 11 supporting the rear corner casting 18 is directly vertically above the pivot 10, and this is a stable position. If the seat 11 were to be in front of the pivot 10, some means would have to be provided to prevent unwanted further pivoting of the front arm 8 when the container is fully loaded onto the vehicle. If the seat 11 were to be positioned to the rear of the pivot 10, then one or more of the rollers 81-83 would be forced up against the side rail 17, risking damage thereto during transit.

When the load handling system 5 is being used to load a flatrack onto the vehicle, the inboard rollers 14 are used instead of the container support members 7. To prevent the container support members 7 from clashing with the flatrack F, the rear arm 9 is stowed in its downward position, and the front arm 8 is locked in position by a locking pin 23 (Fig. 11).

It can be seen from the above-described embodiments shown in the Figs. that use is made of apparatus 6 with static pivots 10, so as to remove the complexity and weight of any heavy-duty power-operated adjustment means (such as a cylinder and piston arrangement) that would be needed to move the pivots 10 during the loading operation. It is possible to make the pivots 10 static because the final part of the loading movement of the load handling system is used to pull the rear corner castings of the container forward onto the seats 11 of the apparatus 6.

Whilst the preferred embodiments have been described in relation to a 20-foot (6-metre) ISO container, the invention is applicable to 20-foot (6-metre) ISO payload modules in general.

## Claims

1. A vehicle (1) comprising:
a load handling system (5) having a loading movement (52,53) for loading a 20-foot (6-metre) ISO payload module (15) onto the vehicle over the rear of the vehicle;
first and second pivots (10) at respective sides of the rear of the vehicle;
first and second support members (7) pivotably mounted on the first and second pivots (10) respectively, for slidably supporting outer lower side regions (17) of the ISO module (15) during loading; and
first and second releasable locks (12) for each locking down a lower corner fitting (18) at the rear of a respective one of the outer lower side regions (17) of the ISO module (15);
**characterised in that**:
each support member (7) has a recessed seat (11) positioned vertically above or in front of the respective pivot (10) and including a respective one of the releasable locks (12); and
the load handling system (5) is arranged so that the final part of its loading movement (52, 53) pulls the lower corner fittings (18) of the ISO module (15) forwards onto the recessed seats (11) of the support members (7).

2. A vehicle according to claim 1, wherein the load handling system (5) is arranged so that the final part of its loading movement (52, 53) is a substantially horizontal, forward sliding movement (53).

3. A vehicle according to claim 1 or 2, wherein the load handling system (5) is of the hook-lift type.

4. A vehicle according to claims 2 and 3, wherein the loading movement of the load handling system (5) causes a loading hook (51) thereof to have a first arcuate phase of movement (52) followed by a second linear phase of movement (53) the end of which is arranged to pull the lower corner fittings (18) of the ISO module (15) forwards onto the seats (11) of the support members (7).

5. A vehicle according to any preceding claim, wherein the pivots (10) have permanently fixed positions relative to a chassis (3) of the vehicle (1).

6. A vehicle according to any preceding claim, wherein each support member (7) has its seat (11) positioned vertically above the respective pivot (10).

7. A vehicle according to any preceding claim, wherein:
each support member (7) has a longitudinal bed with front and rear sections (81-83, 91-93) for slidably supporting the respective outer lower side region (17) of the ISO module (15) during loading, and the seat (11) is positioned in the longitudinal bed between the front and rear sections thereof; and
the load handling system (5) is arranged so that the final part of its loading movement (52, 53) pulls the lower corner fittings (18) of the ISO module (15) forwards off the rear sections (91-93) of the longitudinal beds of the support members (7) and onto the seats (11) of the support members.

8. A vehicle according to claim 7, wherein the arrangement is such that, when the lower corner fittings (18) are sitting on the seats (11) and are locked down by the releasable locks (12), there is at each side of the vehicle a gap (19) between the outer lower side region (17) of the ISO module (15) and at least the front end of the front section (81-83) of the longitudinal bed.

9. A vehicle according to claim 7, wherein the seat (11) of each support member (7) is slopingly recessed into the longitudinal bed between the front and rear sections (81-83, 91-93) thereof, and the arrangement is such that, when the seat (11) is generally horizontal with the respective lower corner fitting (18) sitting thereon and locked down thereonto by the releasable lock (12), the front section (81-83) of the longitudinal bed slopes downwards so as to provide a gap (19) between the outer lower side region (17) of the ISO module (15) and at least the front end of the front section (81-83) of the longitudinal bed.

10. A vehicle according to any one of claims 7 to 9, wherein each support member (7) comprises front and rear arms (8, 9) which are pivotably connected together, the front arm (8) providing the front section (81-83) of the longitudinal bed and the rear arm (9) providing the rear section (91-93) of the longitudinal bed.

11. A vehicle according to claim 10, wherein the front arm (8) also provides the seat (11) and carries the releasable lock (12), and the rear arm (9) is pivotable downwards to a stowed position.

12. A vehicle according to any one of claims 7 to 11, wherein each longitudinal bed is a longitudinal roller bed.

13. A vehicle according to any preceding claim, further comprising a rigid transverse member (13) at the ends of which are the first and second pivots (10) carrying the support members (7).

14. A vehicle according to claim 13, further comprising two rollers (14) mounted on the transverse member (13) inboard of the support members (7), for guiding rails on the underside of a flatrack (F) during loading onto the vehicle (1) by the load handling system (5).

15. A vehicle according to any preceding claim, further comprising at least one main longitudinal chassis girder and wherein the first and second pivots (10) are no more than 25cm behind the rear end(s) of the main longitudinal chassis girder(s).

16. A vehicle according to any preceding claim in combination with a 20-foot (6-metre) ISO container (15), wherein the ISO container is loaded onto the vehicle with its lower corner fittings (18) locked down onto the seats (11) of the container support members (7).

17. A method in which a load handling system (5) of a vehicle (1) is used to load a 20-foot (6-metre) ISO payload module (15) onto the vehicle over the rear end of the vehicle, wherein outer lower side regions (17) of the ISO module are slidably supported on pivotable support members (7) at the rear of the vehicle, **characterised in that** the final part of the loading movement (52, 53) of the load handling system (5) pulls lower corner fittings (18) at the rear ends of the outer lower side regions (17) of the ISO module (15) forwards onto recessed seats (11) positioned in the support members (7) vertically above or in front of the pivots (10) of the support members (7).

18. A method according to claim 17, wherein the final part of the loading movement (52, 53) of the load handling system (5) is a substantially horizontal, forward sliding movement (53).

19. A method according to claim 17 or 18, wherein the load handling system (5) is of the hook-lift type.

20. A method according to claims 18 and 19, wherein the loading movement of the load handling system (5) causes a loading hook (51) thereof which is hooked to the ISO module (15) to move along a first arcuate path (52) and then a second linear path (53) the end of which provides the final part of the loading movement of the load handling system.

21. A method according to any one of claims 17 to 20, wherein the pivots (10) have permanently fixed positions relative to a chassis (3) of the vehicle (1).

22. A method according to any one of claims 17 to 21, wherein the seats (11) are positioned in the support members (7) vertically above the pivots (10).

23. A method according to any one of claims 17 to 22, wherein:
each support member (7) has a longitudinal bed with front and rear sections (81-83, 91-93) which slidably support the respective outer lower side region (17) of the ISO module (15), and the respective seat (11) is positioned in the longitudinal bed between the front and rear sections thereof; and
the final part of the loading movement (52, 53) of the load handling system (5) pulls the lower corner fittings (18) of the ISO module (15) forwards off the rear sections (91-93) of the longitudinal beds of the support members (7) and onto the seats (11).

24. A method according to claim 23, wherein, at the end of the loading movement (52, 53) of the load handling system (5), the lower corner fittings (18) of the ISO module (15) are locked down on the seats (11) and, at each side of the vehicle, there is a gap (19) between the outer lower side region (17) of the ISO module and at least the front end of the front section (81-83) of the longitudinal bed.

25. A method according to claim 23, wherein, as the lower corner fittings (18) of the ISO module (15) are pulled forwards off the rear sections (91-93) of the longitudinal beds and onto the seats (11), the release of the weight of the ISO module (15) from acting on the rear sections (91-93) of the longitudinal beds enables the front sections (81-83) of the longitudinal beds to pivot downwards away from the outer lower side regions (17) of the ISO module.

26. A method according to any one of claims 23 to 25, wherein:
each support member (7) comprises front and rear arms (8, 9) which are pivotably connected together, the front arm (8) providing the front section (81-83) of the longitudinal bed and the rear arm (9) providing the rear section (91-93) of the longitudinal bed;
the front and rear arms (8, 9) of each support member (7) are rigidly locked together during the loading movement (52, 53) of the load handling system (5); and
after the completion of the loading movement the rear arms (9) are unlocked and pivoted downwards to stowed positions.

27. A method according to claims 25 and 26, wherein each front arm (8) also provides a respective one of the seats (11), which when the front section (81-83) of the longitudinal bed is generally horizontal slopes downwards in the rearward direction from the rear end of the front section (81-83) of the longitudinal bed.

28. A method according to any one of claims 17 to 27, wherein the vehicle (1) has at least one main longitudinal chassis girder and the pivots (10) carrying the support members (7) are no more then 25cm behind the rear end(s) of the main longitudinal chassis girder(s).

## Revendications

1. Véhicule (1) comprenant :
un système de manutention de charge (5) présentant un mouvement de chargement (52, 53) destiné à charger un module de charge utile de type ISO de 20 pieds (6 mètres) (15) sur le véhicule au-dessus de l'arrière du véhicule ;
des premier et second pivots (10) à des côtés respectifs de l'arrière du véhicule ;
des premier et second éléments de support (7) montés avec possibilité de pivotement sur les premier et second pivots (10) respectivement, destinés à supporter avec possibilité de coulissement des régions latérales inférieures extérieures (17) du module de type ISO (15) au cours du chargement ; et
des premier et second verrous libérables (12) destinés chacun à verrouiller vers le bas une fixation du coin inférieur (18) à l'arrière d'une région respective parmi les régions latérales inférieures extérieures (17) du module de type ISO (15) ;
**caractérisé en ce que** :
chaque élément de support (7) présente un siège muni d'un creux (11) positionné verticalement au-dessus ou en face du pivot respectif (10) et comprenant un verrou respectif parmi les verrous libérables (12) ; et
le système de manutention de charge (5) est agencé de sorte que la partie finale de son mouvement de chargement (52, 53) tire les fixations des coins inférieurs (18) du module de type ISO (15) vers l'avant sur les sièges munis de creux (11) des éléments de support (7).

2. Véhicule selon la revendication 1, dans lequel le système de manutention de charge (5) est agencé de sorte que la partie finale de son mouvement de chargement (52, 53) est un mouvement (53) de coulissement vers l'avant, pratiquement horizontal.

3. Véhicule selon la revendication 1 ou 2, dans lequel le système de manutention de charge (5) est du type à croc de levage.

4. Véhicule selon les revendications 2 et 3, dans lequel le mouvement de chargement du système de manutention de charge (5) amène un croc de chargement (51) de celui-ci à avoir une première phase de mouvement en arc (52) suivie d'une seconde phase de mouvement rectiligne (53) dont l'extrémité est conçue pour tirer les fixations de coins inférieurs (18) du module de type ISO (15) vers l'avant sur les sièges (11) des éléments de support (7).

5. Véhicule selon l'une quelconque des revendications précédentes, dans lequel les pivots (10) ont des positions fixes en permanence par rapport au châssis (3) du véhicule (1).

6. Véhicule selon l'une quelconque des revendications précédentes, dans lequel chaque élément de support (7) a son siège (11) positionné verticalement au-dessus du pivot respectif (10).

7. Véhicule selon l'une quelconque des revendications précédentes, dans lequel :
chaque élément de support (7) comporte un bâti longitudinal, comportant des sections avant et arrière (81 à 83, 91 à 93) destinées à supporter avec possibilité de coulissement la région latérale inférieure extérieure respective (17) du module de type ISO (15) au cours du chargement, et le siège (11) est positionné dans le bâti longitudinal entre ses sections avant et arrière ; et
le système de manutention de charge (5) est agencé de sorte que la partie finale de son mouvement de chargement (52, 53) tire les fixations de coins inférieurs (18) du module de type ISO (15) vers l'avant à l'écart des sections arrière (91 à 93) des bâtis longitudinaux des éléments de support (7) et sur les sièges (11) des éléments de support.

8. Véhicule selon la revendication 7, dans lequel l'agencement est tel que, lorsque les fixations de coins inférieurs (18) reposent sur les sièges (11) et sont verrouillées vers le bas par les verrous libérables (12), il existe au niveau de chaque côté du véhicule un intervalle (19) entre la région latérale inférieure extérieure (17) du module de type ISO (15) et au moins l'extrémité avant de la section avant (81 à 83) du bâti longitudinal. ,

9. Véhicule selon la revendication 7, dans lequel le siège (11) de chaque élément de support (7) est formé en creux pentu dans le bâti longitudinal entre les sections avant et arrière (81 à 83, 91 à 93) de celui-ci, et l'agencement est tel que, lorsque le siège (11) est généralement horizontal, la fixation de coin inférieur respective (18) reposant sur lui et étant verrouillée vers le bas sur celui-ci par le verrou libérable (12), la section avant (81 à 83) du bâti longitudinal est en pente vers le bas de manière à procurer un intervalle (19) entre la région latérale inférieure extérieure (17) du module de type ISO (15) et au moins l'extrémité avant de la section avant (81 à 83) du bâti longitudinal.

10. Véhicule selon l'une quelconque des revendications 7 à 9, dans lequel chaque élément de support (7) comprend des bras avant et arrière (8, 9) qui sont reliés ensemble avec possibilité de pivotement, le bras avant (8) fournissant la section avant (81 à 83) du bâti longitudinal et le bras arrière (9) fournissant la section arrière (91 à 93) du bâti longitudinal.

11. Véhicule selon la revendication 10, dans lequel le bras avant (8) procure également le siège (11) et porte le verrou libérable (12), et le bras arrière (9) peut pivoter vers le bas à une position repliée.

12. Véhicule selon l'une quelconque des revendications 7 à 11, dans lequel chaque bâti longitudinal est un bâti longitudinal à rouleaux.

13. Véhicule selon l'une quelconque des revendications précédentes, comprenant en outre un élément transversal rigide (13) aux extrémités duquel se trouvent les premier et second pivots (10) portant les éléments de support (7).

14. Véhicule selon la revendication 13, comprenant en outre deux rouleaux (14) montés sur l'élément transversal (13) à l'intérieur du bord des éléments de support (7), pour guider les rails sur la surface inférieure d'une piste plate (F) au cours du chargement sur le véhicule (1) par le système de manutention de charge (5).

15. Véhicule selon l'une quelconque des revendications précédentes, comprenant en outre au moins une poutrelle de châssis longitudinale principale, et dans lequel les premier et second pivots (10) ne sont pas situés à plus de 25 cm derrière la ou les extrémités arrière de la ou des poutrelles de châssis longitudinales principales.

16. Véhicule selon l'une quelconque des revendications précédentes en combinaison avec un conteneur de type ISO de 20 pieds (6 mètres), où le conteneur de type ISO est chargé sur le véhicule, ses fixations de coins inférieurs (18) étant verrouillées vers le bas sur les sièges (11) des éléments de support de conteneur (7).

17. Procédé dans lequel un système de manutention de charge (5) d'un véhicule (1) est utilisé pour charger un module de charge utile (15) de type ISO de 20 pieds (6 mètres) sur le véhicule sur l'extrémité arrière du véhicule, dans lequel les régions latérales inférieures extérieures (17) du module de type ISO sont supportées avec possibilité de coulissement sur les éléments de support pouvant pivoter (7) à l'arrière du véhicule, **caractérisé en ce que** la partie finale du mouvement de chargement (52, 53) du système de manutention de charge (5) tire les fixations de coins inférieurs (18) aux extrémités arrière des régions latérales inférieures extérieures (17) du module de type ISO (15) vers l'avant sur des sièges en creux (11) positionnés dans les éléments de support (7) verticalement au-dessus des pivots (10) des éléments de support (7) ou devant ceux-ci.

18. Procédé selon la revendication 17, dans lequel la partie finale du mouvement de chargement (52, 53) du système de manutention de charge (5) est un mouvement (53) de coulissement vers l'avant, pratiquement horizontal.

19. Procédé selon la revendication 17 ou 18, dans lequel le système de manutention de charge (5) est du type à croc de levage.

20. Procédé selon les revendications 18 et 19, dans lequel le mouvement de chargement du système de manutention de charge (5) amène son croc de chargement (51), qui est accroché au module de type ISO (15), à se déplacer le long d'un premier trajet arqué (52) et ensuite le long d'un second trajet rectiligne (53) dont la fin procure la partie finale du mouvement de chargement du système de manutention de charge.

21. Procédé selon l'une quelconque des revendications 17 à 20, dans lequel les pivots (10) ont des positions fixes en permanence par rapport à un châssis (3) du véhicule (1).

22. Procédé selon l'une quelconque des revendications 17 à 21, dans lequel les sièges (11) sont positionnés dans les éléments de support (7) verticalement au-dessus des pivots (10).

23. Procédé selon l'une quelconque des revendications 17 à 22, dans lequel :
chaque élément de support (7) comporte un bâti longitudinal présentant des sections avant et arrière (81 à 83, 91 à 93) qui supportent avec possibilité de coulissement la région latérale inférieure extérieure respective (17) du module de type ISO (15), et le siège respectif (11) est positionné dans le bâti longitudinal entre ses sections avant et arrière ; et
la partie finale du mouvement de chargement (52, 53) du système de manutention de charge (5) tire les fixations de coins inférieurs (18) du module de type ISO (15) vers l'avant à l'écart des sections arrière (91 à 93) des bâtis longitudinaux des éléments de support (7) et sur les sièges (11).

24. Procédé selon la revendication 23, dans lequel, à la fin du mouvement de chargement (52, 53) du système de manutention de charge (5), les fixations de coins inférieurs (18) du module de type ISO (15) sont verrouillées vers le bas sur les sièges (11) et, de chaque côté du véhicule, il existe un intervalle (19) entre la région latérale inférieure extérieure (17) du module de type ISO et au moins l'extrémité avant de la section avant (81 à 83) du bâti longitudinal.

25. Procédé selon la revendication 23, dans lequel, lorsque les fixations de coins inférieurs (18) du module de type ISO (15) sont tirées vers l'avant à l'écart des sections arrière (91 à 93) des bâtis longitudinaux et sur les sièges (11), la cessation de l'action du poids du module de type ISO (15) sur les sections arrière (91 à 93) des bâtis longitudinaux permet que les sections avant (81 à 83) des bâtis longitudinaux pivotent vers le bas à l'écart des régions latérales inférieures extérieures (17) du module de type ISO.

26. Procédé selon l'une quelconque des revendications 23 à 25, dans lequel :
chaque élément de support (7) comprend des bras avant et arrière (8, 9) qui sont reliés ensemble avec possibilité de pivotement, le bras avant (8) procurant la section avant (81 à 83) du bâti longitudinal et le bras arrière (9) procurant la section arrière (91 à 93) du bâti longitudinal,
les bras avant et arrière (8, 9) de chaque élément de support (7) sont verrouillés de façon rigide ensemble au cours du mouvement de chargement (52, 53) du système de manutention de charge (5) ; et
après l'achèvement du mouvement de chargement, les bras arrière (9) sont déverrouillés et amenés à pivoter vers le bas vers des positions repliées.

27. Procédé selon les revendications 25 et 26, dans lequel chaque bras avant (8) procure également un siège respectif parmi les sièges (11) qui, lorsque la section avant (81 à 83) du bâti longitudinal est généralement horizontale, est globalement en pente vers le bas dans la direction vers l'arrière depuis l'extrémité arrière de la section avant (81 à 83) du bâti longitudinal.

28. Procédé selon l'une quelconque des revendications 17 à 27, dans lequel le véhicule (1) comporte au moins une poutrelle de châssis longitudinale principale et les pivots (10) supportant les éléments de support (7) ne sont pas à plus de 25 cm derrière l'extrémité ou les extrémités arrière de la poutrelle ou des poutrelles de châssis longitudinales principales.

## Patentansprüche

1. Fahrzeug (1) mit:
einem Lasthandhabungssystem (5) mit einer Ladebewegung (52, 53) zum Aufladen eines 50 Fuß-(6 Meter-)ISO-Nutzlastmoduls (15) über die Rückseite des Fahrzeuges auf das Fahrzeug;
ersten und zweiten Drehpunkten (10) an entsprechenden Seiten der Rückseite des Fahrzeuges;
ersten und zweiten Auflageteilen (7), die schwenkbar auf ersten bzw. zweiten Drehpunkten (10) für die gleitbare Aufnahme äußerer unterer Seitenbereiche (17) des ISO-Moduls (15) während des Ladens angebracht sind; und
ersten und zweiten lösbaren Verschlüssen (12) für jedes Verriegeln eines unteren Eckbeschlages (18) an der Hinterseite eines entsprechenden Bereiches der äußeren unteren Seitenbereiche (17) des ISO-Moduls (25);
**dadurch gekennzeichnet, daß**
jedes Auflageteil (7) einen mit Ausnehmungen versehenen bzw. ausgesparten Sitz (11) hat, der vertikal über und vor dem entsprechenden Drehpunkt (10) angeordnet ist und einen entsprechenden der lösbaren Verschlüsse (12) aufweist; und
daß das Handhabungssystem (5) so angeordnet ist, daß der Endteil seiner Ladebewegung (52, 53) die unteren Eckbeschläge (18) des ISO-Moduls (15) auf die ausgesparten Sitze (11) der Auflageteile (7) nach vorn zieht.

2. Fahrzeug nach Anspruch 1, wobei das Lasthandhabungssystem (5) so angeordnet ist, daß der Endteil seiner Ladebewegung (52, 53) eine im wesentlichen horizontale, nach vom gleitende Bewegung (53) ist.

3. Fahrzeug nach Anspruch 1 oder 2, wobei das Lasthandhabungssystem (5) vom Hook-Lift-Typ bzw. vom Typ mit Einhänge-Hebevorrichtung ist.

4. Fahrzeug nach Anspruch 2 und 3, wobei die Ladebewegung des Lasthandhabungssystems (5) seinen Ladehaken (51) zu einer ersten bogenförmigen Phase der Bewegung (52) veranlaßt, gefolgt von einer zweiten linearen Bewegungsphase (53), deren Ende angeordnet ist, um die unteren Eckbeschläge (18) des ISO-Moduls (15) auf die Sitze (11) der Auflageteile (7) nach vorn zu ziehen.

5. Fahrzeug nach einem vorhergehenden Anspruch, wobei die Drehpunkte (10) relativ zu einem Fahrgestell (3) des Fahrzeuges (1) permanent feste Positionen haben.

6. Fahrzeug nach einem vorhergehenden Anspruch, wobei der Sitz (11) jedes Auflageteils (7) vertikal über dem entsprechenden Drehpunkt (10) angeordnet ist.

7. Fahrzeug nach einem vorhergehenden Anspruch, wobei:
jedes Auflageteil (7) ein Längsbett hat mit vorderen und hinteren Abschnitten (81-83, 91-93) für die gleitende Aufnahme des entsprechenden äußeren unteren Seitenbereiches (17) des ISO-Moduls (15) während des Ladens, und der Sitz (11) in dem Längsbett zwischen seinen vorderen und hinteren Abschnitten angeordnet ist; und
das Lasthandhabungssystem (5) so angeordnet ist, daß der Endteil seiner Ladebewegung (52, 53) die unteren Eckbeschläge (18) des ISO-Moduls (15) nach vom von den hinteren Abschnitten (91-93) der Längsbetten der Auflageteile (7) weg und auf die Sitze (11) der Auflageteile zieht.

8. Fahrzeug nach Anspruch 7, wobei die Anordnung derart ist, daß wenn die unteren Eckbeschläge (18) auf den Sitzen (11) sitzen und durch lösbare Verschlüsse (12) verriegelt sind, an jeder Seite des Fahrzeuges sich ein Spalt (19) zwischen dem äußeren unteren Seitenbereich (17) des ISO-Moduls (15) und mindestens dem Vorderende des vorderen Abschnittes (81-83) des Längsbettes befindet.

9. Fahrzeug nach Anspruch 7, wobei der Sitz (11) jedes Auflageteils (7) schräg in das Längsbett zwischen seinem vorderen und hinteren Abschnitt (81-83, 91-93) ausgespart ist und die Anordnung derart ist, daß wenn der Sitz (11) bezüglich des jeweiligen unteren Eckbeschlages (18), welcher auf diesem sitzt und durch den lösbaren Verschluß (12) auf diesem verriegelt ist, im allgemeinen horizontal ist, der Vorderabschnitt (81-83) des Längsbettes schräg nach unten abfällt, um einen Spalt (19) zwischen dem unteren Seitenbereich (17) des ISO-Moduls (15) und mindestens dem Vorderende des vorderen Abschnittes (81-83) des Längsbettes vorzusehen.

10. Fahrzeug nach einem der Ansprüche 7 bis 9, wobei jedes Auflageteil (7) vordere und hintere Arme (8, 9) aufweist, die schwenkbar miteinander verbunden sind, wobei der vordere Arm (8) den vorderen Abschnitt (81-83) des Längsbettes und der hintere Arm (9) den hinteren Abschnitt (91-93) des Längsbettes vorsehen.

11. Fahrzeug nach Anspruch 10, wobei der Vorderarm (8) auch den Sitz (11) vorsieht und den lösbaren Verschluß (12) trägt und der Hinterarm (9) in eine Stauposition nach unten schwenkbar ist.

12. Fahrzeug nach einem der Ansprüche 7 bis 11, wobei jedes Längsbett ein Längsrollenbett ist.

13. Fahrzeug nach einem vorhergehenden Anspruch, femer mit einem starren Querteil (13), an dessen Enden sich die die Auflageteile (7) tragenden ersten und zweiten Drehpunkte (10) befinden.

14. Fahrzeug nach Anspruch 13, femer mit zwei Rollen (14), die auf dem Querteil (13) innerhalb der Auflageteile (7) für das Führen von Schienen auf der Unterseite eines Flatracks (F) (Transportplattform nur mit Stirnseiten) während des Ladens auf das Fahrzeug (1) durch das Lasthandhabungssystem (5) angebracht sind.

15. Fahrzeug nach einem vorhergehenden Anspruch, ferner mit mindestens einem Hauptlängsfahrgestellträger, wobei die ersten und zweiten Drehpunkte (10) sich nicht mehr als 25 cm hinter dem hinteren Ende (den hinteren Enden) des Hauptlängsfahrgestellträgers (der Hauptlängsfahrgestellträger) befinden.

16. Fahrzeug nach einem vorhergehenden Anspruch in Kombination mit einem 20 Fuß-(6 Meter-) ISO-Behälter (15), wobei der ISO-Behälter auf das Fahrzeug geladen wird und seine unteren Eckbeschläge (18) auf den Sitzen (11) der Containerauflageteile (7) verriegelt sind.

17. Verfahren, bei welchem ein Lasthandhabungssystem (5) eines Fahrzeuges (1) verwendet wird, um ein 20 Fuß-(6 Meter-) ISO-Nutzlastmodul (15) über das hintere Ende des Fahrzeuges auf das Fahrzeug zu laden, wobei äußere untere Seitenbereiche (17) des ISO-Moduls auf schwenkbaren Auflageteilen (7) an der Hinterseite des Fahrzeuges gleitbar gehaltert werden, **dadurch gekennzeichnet, daß** der Endteil der Ladebewegung (52, 53) des Lasthandhabungssystems (5) untere Eckbeschläge (18) an den hinteren Enden der äußeren unteren Seitenbereiche (17) des ISO-Moduls (15) nach vorn auf ausgesparte Sitze (11) zieht, die in den Auflageteilen (7) vertikal über oder vor den Drehpunkten (10) der Auflageteile (7) angeordnet sind.

18. Verfahren nach Anspruch 17, wobei der Endteil der Ladebewegung (52, 53) des Lasthandhabungssystems (5) eine im wesentlichen horizontale Vorwärtsgleitbewegung (53) ist.

19. Verfahren nach Anspruch 17 oder 18, wobei das Lasthandhabungssystem (5) vom Hook-Lift-Typ ist (Typ mit Einhänge-Hebevorrichtung).

20. Verfahren nach den Ansprüchen 18 und 19, wobei die Ladebewegung des Lasthandhabungssystems (5) seinen Lasthaken (51), der am ISO-Modul (15) eingehakt ist, veranlaßt, sich längs eines ersten bogenförmigen Weges (52) und dann eines zweiten linearen Weges (53) zu bewegen, dessen Ende den Endteil der Ladebewegung des Lasthandhabungssystems vorsieht.

21. Verfahren nach einem der Ansprüche 17 bis 20, wobei die Drehpunkte (10) relativ zu einem Fahrgestell (3) des Fahrzeuges (1) permanent feste Positionen haben.

22. Verfahren nach einem der Ansprüche 17 bis 21, wobei die Sitze (11) in den Auflageteilen (7) vertikal über den Drehpunkten (10) angeordnet sind.

23. Verfahren nach einem der Ansprüche 17 bis 22, wobei:
jedes Auflageteil (7) ein Längsbett mit vorderen und hinteren Abschnitten (81-83, 91-93) hat, welche den entsprechenden äußeren unteren Seitenabschnitt (17) des ISO-Moduls (15) gleitend stützen und der entsprechende Sitz (11) in dem Längsbett zwischen seinem vorderen und hinteren Abschnitt angeordnet ist; und
der Endteil der Ladebewegung (52, 53) des Lasthandhabungssystems (5) die unteren Eckbeschläge (18) des ISO-Moduls (15) von den hinteren Abschnitten (91-93) der Längsbetten der Auflageteile (7) nach vorn weg und auf die Sitze (11) zieht.

24. Verfahren nach Anspruch 23, wobei am Ende der Ladebewegung (52, 53) des Lasthandhabungssystems (5) die unteren Eckbeschläge (18) des ISO-Moduls (15) auf den Sitzen (11) verriegelt werden und auf jeder Seite des Fahrzeuges sich ein Spalt (19) zwischen dem äußeren unteren Seitenbereich (17) des ISO-Moduls und mindestens dem vorderen Ende des Vorderabschnittes (81-83) des Längsbettes befindet.

25. Verfahren nach Anspruch 23, wobei beim Vorwärtsziehen der unteren Eckbeschläge (18) des ISO-Moduls (15) weg von den hinteren Abschnitten (91-93) der Längsbetten und auf den Sitz (11) die Gewichtsentlastung des ISO-Moduls (15) vom Einwirken auf die hinteren Abschnitte (91-93) der Längsbetten die Vorderabschnitte (81-83) der Längsbetten in die Lage versetzt, von den äußeren unteren Seitenbereichen (17) des ISO-Moduls weg nach unten zu schwenken.

26. Verfahren nach einem der Ansprüche 23 bis 25, wobei:
jedes Auflageteil (7) vordere und hintere Arme (8, 9) aufweist, die schwenkbar miteinander verbunden sind, wobei der Vorderarm (8) den Vorderabschnitt (81-83) des Längsbettes und der Hinterarm (9) den hinteren Abschnitt (91-93) des Längsbettes vorsehen;
der vordere und hintere Arm (8, 9) jedes Auflageteils (7) während der Ladebewegung (52, 53) des Lasthandhabungssystems (5) starr miteinander verriegelt werden und
nach Abschluß der Ladebewegung die Hinterarme (9) entriegelt und in Staupositionen nach unten geschwenkt werden.

27. Verfahren nach Anspruch 25 und 26, wobei jeder Vorderarm (8) auch einen entsprechenden Sitz (11) vorsieht, der, wenn der Vorderabschnitt (81-83) des Längsbettes im allgemeinen horizontal ist, nach unten in die Rückwärtsrichtung von dem rückwärtigen Ende des Vorderabschnittes (81-83) des Längsbettes abfällt.

28. Verfahren nach einem der Ansprüche 17 bis 27, wobei das Fahrzeug mindestens einen Hauptlängsfahrgestellträger hat und die Drehpunkte (10), welche die Auflageteile (7) tragen, sich nicht mehr als 25 cm hinter dem rückwärtigen Ende (den rückwärtigen Enden) des Hauptlängsfahrgestellträgers (der Hauptlängsfahrgestellträger) befinden.
